# FASCICULE DE BREVET EUROPEEN

(11) **EP 3 288 880 B1**
(45) Date de publication et mention de la délivrance du brevet: **12.12.2018**
(21) Numéro de dépôt: 16722322.1
(22) Date de dépôt: 29.04.2016
(51) Int. Cl.: B65H 54/34, B65H 57/04

(54) **DISPOSITIF ET PROCÉDÉ D'ENFILAGE D'UNE FIBRE OPTIQUE SUR UNE BOBINE**
VORRICHTUNG UND VERFAHREN ZUM EINSETZEN EINER OPTISCHEN FASER IN EINE SPULE
DEVICE AND METHOD FOR INSERTING AN OPTICAL FIBER ONTO A BOBBIN

(30) Priorité: 29.04.2015 FR 1553841
(43) Date de publication de la demande: 07.03.2018
(73) Titulaire: Conductix Wampfler France, 92700 Colombes (FR)
(72) Inventeur: GRILLET, Michel, 73330 DOMESSIN (FR)
(74) Mandataire: Regimbeau
(86) Numéro de dépôt international: PCT/FR2016/051008
(87) Numéro de publication internationale: WO 2016/174365

(56) Documents cités:
- EP-A2- 0 509 384
- JP-A- H08 327 831
- US-A1- 2013 284 843

## Description

### DOMAINE DE L'INVENTION

La présente invention concerne un dispositif et un procédé d'enfilage d'une fibre optique sur une bobine.

### ARRIERE PLAN DE L'INVENTION

A l'issue de la fabrication d'une fibre optique, une certaine longueur de ladite fibre optique est enroulée sur une bobine en vue de son stockage et de son transport vers un lieu d'utilisation. Cette longueur est typiquement de l'ordre de quelques kilomètres.

En vue de pouvoir tester un échantillon de la fibre optique de ladite bobine, il est connu d'enrouler une sur-longueur de fibre optique sur un magasin dédié agencé dans la bobine. Cette sur-longueur correspondant à une portion de la fibre optique enroulée en premier sur la bobine, un tel magasin permet de rendre cette sur-longueur accessible après l'enroulement de la totalité de la fibre.

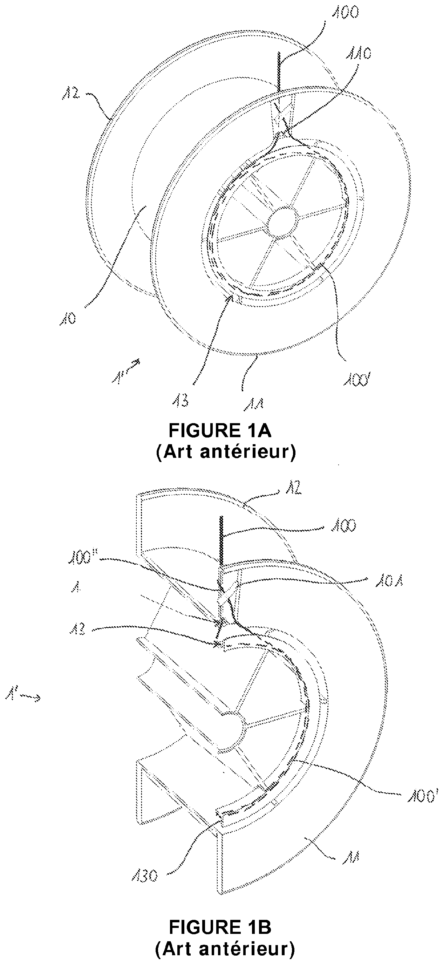

La figure 1A est une vue en perspective d'une bobine 1' de type connu comprenant un tel magasin.

La bobine 1' comprend un fût 10 cylindrique destiné à recevoir la fibre optique, et deux flasques 11, 12 qui s'étendent radialement à chaque extrémité du fût 10 afin de retenir axialement la fibre optique enroulée sur le fût.

L'un des deux flasques (en l'occurrence le flasque 11) est pourvu d'un orifice 110 de passage de la fibre optique 100.

Ledit flasque 11 sépare le fût 10 d'un magasin 13 cylindrique qui est destiné à recevoir une sur-longueur 100' de fibre optique.

Comme on le voit mieux sur la figure 1B le flasque présente un rebord 130 circonférentiel pour retenir axialement la sur-longueur 100' de fibre optique enroulée sur le magasin.

Pour enrouler une sur-longueur 100' de fibre optique sur le magasin, un opérateur fait passer une portion 100' de fibre optique de la longueur souhaitée au travers de l'orifice de passage 110 (du fût vers le magasin) puis enroule manuellement cette portion de fibre optique sur le magasin 13, derrière le rebord circonférentiel 130. Ensuite, pour éviter tout déroulement intempestif de la fibre optique, il fixe l'extrémité 100" de celle-ci sur le flasque 11 au moyen d'un adhésif 101.

Cette opération manuelle est longue et coûteuse.

Le document EP 0 509 384 divulgue un dispositif d'enfilage d'une fibre optique au travers d'un orifice de passage ménagé dans un flasque d'une bobine selon le préambule de la revendication indépendante 1 ainsi qu'un procédé d'enfilage correspondant selon le préambule de la revendication indépendante 7.

### BREVE DESCRIPTION DE L'INVENTION

Un but de l'invention est d'automatiser la mise en place de ladite sur-longueur de fibre optique sur le magasin, et plus précisément de concevoir un dispositif permettant de passer automatiquement la fibre optique au travers de l'orifice de passage ménagé dans le flasque de la bobine.

Conformément à l'invention, il est proposé un dispositif d'enfilage d'une fibre optique au travers d'un orifice de passage ménagé dans un flasque d'une bobine, tel que décrit dans la revendication indépendante 1, caractérisé en ce qu'il comprend, de l'amont vers l'aval sur la trajectoire de la fibre optique :
- un système d'entraînement en défilement de la fibre optique,
- un outil de coupe de la fibre optique,
- un premier élément de guidage de la fibre optique comprenant une fente dont le fond décrit une courbe entre une ouverture d'entrée située en regard du système d'entraînement et une ouverture de sortie destinée à être agencée en regard de l'orifice de passage du flasque de la bobine.

Selon un mode de réalisation, ce dispositif comprend en outre, entre l'outil de coupe et le premier élément de guidage, un second élément de guidage comprenant une portion conique présentant une ouverture d'entrée de la fibre optique plus large que l'orifice de sortie de la fibre optique.

De manière particulièrement avantageuse, le second élément de guidage comprend une portion cylindrique en aval de la portion conique sur la trajectoire de la fibre optique.

Selon un mode de réalisation, le système d'entraînement de la fibre optique comprend deux galets agencés sur la trajectoire de la fibre optique de sorte à exercer une pression sur la fibre optique, l'un desdits galets étant entraîné en rotation par un moteur.

Un autre objet de l'invention concerne une machine de production d'une fibre optique caractérisée en ce qu'elle comprend un dispositif d'enfilage tel que décrit ci-dessus.

Selon un mode de réalisation, ladite machine comprend en outre :
- au moins un cabestan et au moins une poulie, lesdits cabestan(s) et poulie(s) définissant une trajectoire de la fibre optique dans une zone principale de ladite machine,
- un système de guidage de la fibre optique comprenant un organe de transmission et une pince rigidement liée audit organe apte à tenir une extrémité de la fibre optique, ledit organe de transmission étant agencé parallèlement à la trajectoire de la fibre optique.

Un autre objet de l'invention concerne un procédé tel que décrit dans la revendication indépendante 7, d'enfilage d'une fibre optique au travers d'un orifice de passage ménagé dans un flasque d'une bobine au moyen d'un dispositif tel que décrit ci-dessus.

Ledit procédé comprend successivement :
- la fourniture dudit dispositif d'enfilage, l'orifice de passage étant positionné en regard de l'ouverture de sortie du premier élément de guidage,
- l'engagement de la fibre optique dans le système d'entraînement,
- la coupe de la fibre optique par l'outil de coupe,
- l'entraînement en défilement de l'extrémité de la fibre optique vers l'ouverture d'entrée du premier élément de guidage et le guidage de la fibre optique dans la fente jusqu'à l'ouverture de sortie.

### BREVE DESCRIPTION DES DESSINS

D'autres caractéristiques et avantages de l'invention ressortiront de la description détaillée qui va suivre, en référence aux dessins annexés sur lesquels :
- la figure 1A est une vue en perspective d'une bobine comprenant un magasin sur lequel est enroulée une sur-longueur de fibre optique, la figure 1B est une vue en coupe partielle de la bobine de la figure 1A,
- la figure 2 est une vue d'ensemble d'une machine de production d'une fibre optique comprenant un dispositif d'enfilage selon l'invention,
- les figures 3 à 5 sont des vues en perspective d'un dispositif d'enfilage de la fibre optique selon l'invention, dans les différentes étapes de son utilisation,
- la figure 6 est une vue en coupe partielle des éléments de guidage de la fibre optique.

### DESCRIPTION DETAILLEE DE MODES DE REALISATION DE L'INVENTION

La bobine est du type de la bobine illustrée sur la figure 1, à savoir qu'elle comprend un fût cylindrique destiné à recevoir la fibre optique enroulée et, de part et d'autre du fût, deux flasques s'étendant radialement de sorte à retenir la fibre optique dans la direction axiale.

L'un des flasques est pourvu d'un orifice de passage de la fibre optique. Les dimensions d'un tel orifice sont typiquement de quelques millimètres. L'orifice est de préférence agencé dans le flasque au voisinage du fût.

Un magasin cylindrique destiné à recevoir la sur-longueur de fibre enroulée est agencé dans la bobine en étant séparé du fût par le flasque dans lequel est agencé ledit orifice de passage de la fibre optique.

Le magasin peut faire partie intégrante du fût et des flasques, la bobine étant alors monobloc. De manière alternative, le magasin peut se présenter sur la forme d'une pièce distincte qui est ensuite solidarisée sur le fût et/ou les flasques.

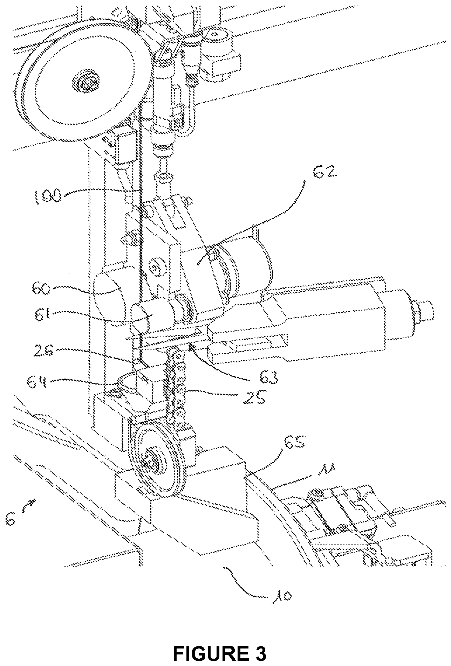

Sur les figures 3 à 6, qui illustrent le dispositif d'enfilage de la fibre optique permettant de passer la fibre optique au travers de l'orifice de passage, seuls le flasque 11 pourvu de l'orifice de passage 110 et le fût 10 de la bobine sont partiellement représentés.

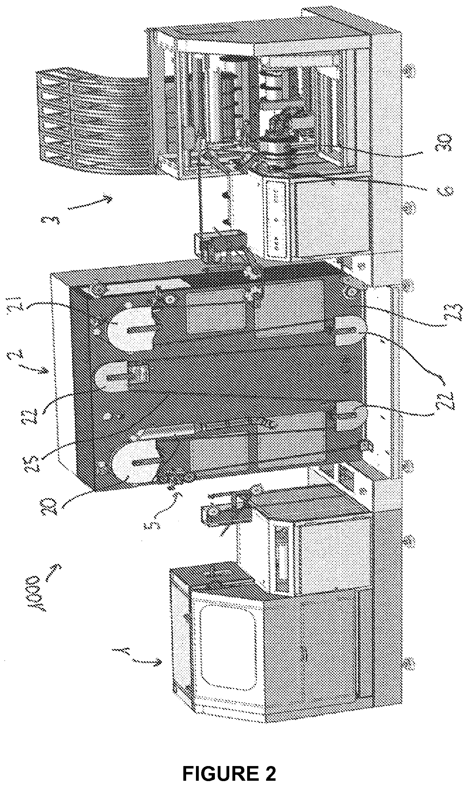

La figure 2 est une vue d'ensemble d'une machine de production d'une fibre optique pouvant comprendre un tel dispositif d'enfilage. On comprendra toutefois que le dispositif d'enfilage est susceptible d'être utilisé dans d'autres types de machine dans lesquelles une sur-longueur de fibre optique doit être enroulée sur une bobine telle que décrite ci-dessus.

La machine 1000 comprend, de l'amont vers l'aval sur la trajectoire de la fibre optique, un dérouleur 1, une zone principale 2 et un enrouleur 3.

Le dérouleur 1 est conçu pour recevoir une bobine (non représentée) de fibre optique destinée à défiler dans la zone principale de la machine.

L'enrouleur 3 est conçu pour recevoir une bobine 30 vide sur laquelle la fibre optique en sortie de la zone principale 2 est enroulée sur le magasin sous la forme d'une sur-longueur avant d'être enroulée sur le fût.

Dans le cas illustré sur la figure 2 où la machine est destinée au test mécanique de la fibre optique, la zone principale 2 comprend un bâti 23 sur lequel sont agencés un cabestan d'entrée 20, un cabestan de sortie 21, et une pluralité de poulies 22 agencées entre les cabestans, les tambours des cabestans 20, 21 et des poulies 22 étant dans un même plan vertical. La vitesse de rotation respective des cabestans 20, 21 est choisie pour appliquer une tension mécanique déterminée à la fibre optique. Dans d'autres applications, notamment le renvidage (c'est-à-dire le reconditionnement d'une bobine comprenant une grande longueur de fibre optique en une pluralité de bobines portant une plus faible longueur de fibre optique), un seul cabestan (correspondant généralement au cabestan d'entrée 20 de la figure 2) peut être suffisant, ledit cabestan ayant pour fonction d'entraîner la fibre optique. De même, le nombre de poulies illustrées sur la figure 2 n'est qu'indicatif, la machine pouvant comprendre une ou plusieurs poulies.

En vue du transfert de la fibre optique du dérouleur vers l'enrouleur, l'extrémité de la fibre optique déroulée de la bobine 10 est insérée dans la zone principale en amont du cabestan d'entrée 20, puis elle est guidée entre les différentes poulies 22 jusqu'au cabestan de sortie 21. En aval du cabestan de sortie 21, la fibre optique est guidée jusqu'à la bobine 30 en vue de son enroulement sur ladite bobine.

Pour insérer automatiquement la fibre optique dans la zone principale puis dans la bobine 30, ladite machine 1000 comprend un système de guidage de la fibre optique, comprenant un organe de transmission 25 (par exemple une chaîne ou une courroie) et une pince 26 (visible sur la figure 3) solidaire dudit organe de transmission 25 et comprenant deux mors adaptés pour pincer la fibre optique lorsqu'ils sont serrés. L'organe de transmission 25 est agencé sous la forme d'une boucle continue sur la même face du bâti 23 que les cabestans 20, 21 et les poulies 22, parcourant une trajectoire parallèle à celle de la fibre optique entre lesdits cabestans et poulies.

Lorsqu'une nouvelle longueur de fibre optique doit être transférée du dérouleur vers l'enrouleur, un opérateur positionne la fibre optique à l'entrée de la zone principale 2 puis le dispositif 5 de préhension de la fibre optique est actionné pour que la pince vienne pincer une partie de la fibre optique au voisinage de son extrémité (par exemple juste en amont du cabestan d'entrée 20). Ensuite, l'organe de transmission 25 entraîne la fibre optique maintenue par la pince au niveau du cabestan d'entrée 20, de l'ensemble des poulies 22 et du cabestan de sortie 21, jusqu'à la bobine 30. A cet effet, la pince maintient la fibre optique à une distance déterminée de l'organe de transmission, choisie pour permettre l'engagement de la fibre sur chacune des poulies.

Une fois que la fibre optique a été guidée jusqu'à la bobine, la pince est ramenée à l'entrée de la zone principale puis l'organe de transmission est stoppé.

Les figures 3 à 6 illustrent un mode de réalisation du dispositif 6 permettant la préhension automatique de la fibre optique de la pince pour la passer au travers de l'orifice 110.

Ledit dispositif 6 est avantageusement situé à la sortie de la zone principale 2.

Le dispositif 6 comprend principalement, de l'amont vers l'aval sur la trajectoire de la fibre optique, un système 60, 61 d'entraînement de la fibre optique, un outil 63 de coupe de la fibre optique et au moins un premier élément 65 de guidage de la fibre optique vers l'orifice de passage situé dans le flasque 11.De manière optionnelle, un second élément de guidage 64 est agencé entre l'outil de coupe 63 et le premier élément de guidage 65.

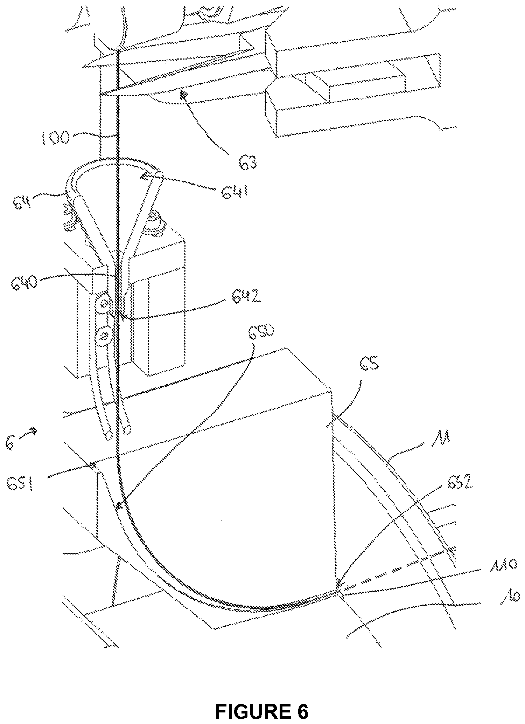

Comme on le voit mieux sur la figure 6, l'élément de guidage 65 comprend une fente présentant un fond 650 incurvé s'étendant entre une ouverture 651 d'entrée de la fibre et une ouverture 652 de sortie de la fibre. Selon un mode de réalisation, les parois qui, avec le fond 650, délimitent la fente sont comprises dans deux plans parallèles. De manière alternative, lesdites parois ne sont pas parallèles mais inclinées de sorte à se rapprocher vers la partie inférieure de l'élément de guidage 65, de sorte à créer un effet d'entonnoir permettant de préciser progressivement la position de la fibre optique vers l'orifice de sortie 652.

La largeur de l'ouverture d'entrée 651 (c'est-à-dire la distance entre les deux parois entre lesquelles s'étend la fente) est supérieure au diamètre de la fibre optique. Plus l'ouverture d'entrée 651 est proche du système d'entraînement 60, 61 (ou, le cas échéant, du deuxième élément de guidage 64) plus la largeur de ladite ouverture 651 peut être faible, car on considère que la fibre optique est suffisamment guidée pour que son extrémité parcoure une trajectoire rectiligne entre le système d'entraînement 60, 61 (ou, le cas échéant, le deuxième élément de guidage 64) et l'ouverture 651. A titre purement indicatif, la largeur de l'ouverture d'entrée 651 est comprise entre 2 et 10 mm. La largeur de l'ouverture de sortie 652 est quant à elle inférieure ou égale à la largeur de l'orifice de passage 110. A titre tout à fait indicatif, la largeur de l'ouverture d'entrée 652 est comprise entre 0,5 et 2 mm.

Comme illustré sur la figure 3, la fibre optique 100 est amenée en regard du fût 10 de la bobine, au voisinage du flasque 11, par la pince 26 précitée (seule une partie de l'organe de transmission 25 auquel est attachée la pince 26 est représentée pour faciliter la lisibilité de la figure). Dans le mode de réalisation illustré, la bobine est agencée avec son axe de rotation sensiblement horizontal tandis que la fibre optique est amenée sensiblement verticalement, parallèlement au flasque 11. Par conséquent, pour pouvoir passer au travers de l'orifice de passage ménagé dans le flasque 11, la fibre optique doit être courbée de sorte à se présenter sensiblement horizontalement en regard de l'orifice de passage.

Lorsque la pince est dans la position illustrée sur la figure 3, la fibre optique 100 est prise entre deux galets 60, 61 qui font partie d'un moyen d'entraînement de la fibre optique pour l'enfilage de la fibre optique au travers de l'orifice de passage. Le galet 60 est mobile en rotation au moyen d'un moteur, tandis que le galet 61 est libre. La distance entre les deux galets est ajustée pour exercer un léger effort de pression sur la fibre optique de sorte à ce que la rotation du galet 60 puisse entraîner la fibre optique en translation entre les surfaces circonférentielles des deux galets. Le système d'entraînement est solidaire d'un support 62 qui peut être déplacé par exemple au moyen d'un bras motorisé entre la position de la figure 3 et une position de repos où il est en retrait de la fibre optique.

On pourrait toutefois utiliser un autre système d'entraînement de la fibre optique sans pour autant sortir du cadre de la présente invention. Un tel système d'entraînement pourrait comprendre un cabestan ou encore une chenillette à bandes.

Parallèlement à la mise en place des galets 60, 61 de part et d'autre de la fibre optique 100, l'élément de guidage 65 est amené de sorte que l'ouverture d'entrée 651 soit en regard de la fibre optique 100 et que l'ouverture de sortie 652 soit en regard de l'orifice de passage 110 du flasque 11 de la bobine.

D'autre part, un outil de coupe 63 en forme de ciseaux est amené en regard de la fibre optique, entre les galets 60, 61 et l'élément de guidage 65. Dans cette situation, les lames de l'outil de coupe sont ouvertes de part et d'autre de la fibre optique.

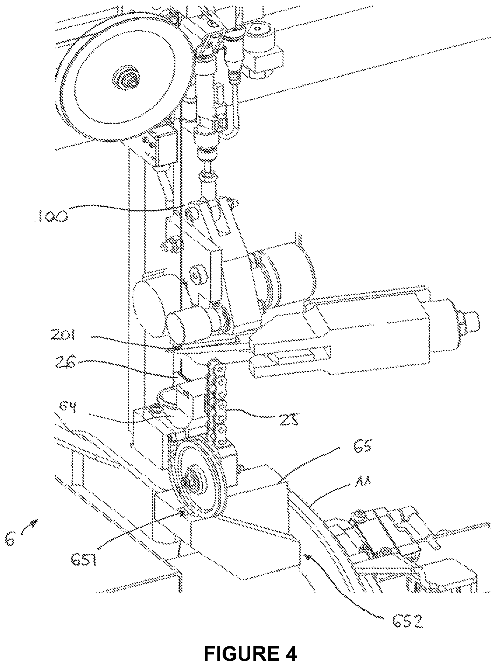

Comme illustré sur la figure 4, l'outil de coupe 63 est actionné pour couper la fibre optique en refermant les lames. La portion de fibre optique située en amont de l'outil de coupe sur le parcours de la fibre optique est évacuée de sorte à être mise au rebut. Puis les lames de l'outil de coupe sont rouvertes.

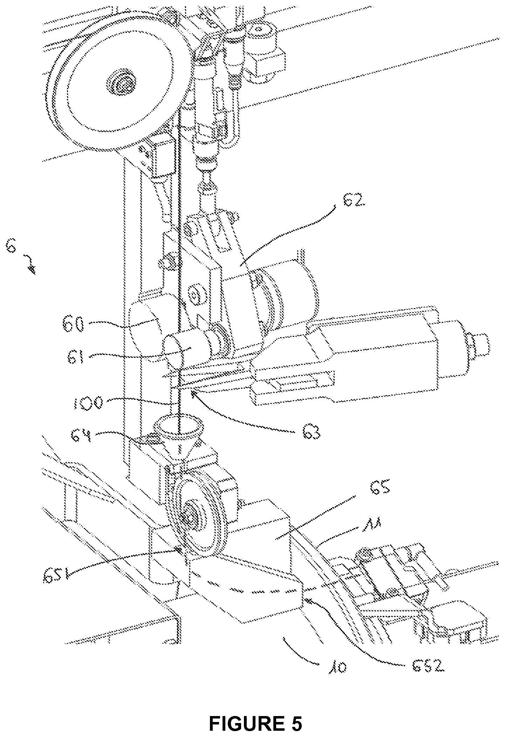

En référence aux figures 5 et 6, le galet 60 est alors entraîné en rotation de sorte que la fibre optique 100 descende vers l'élément de guidage 65 et passe dans l'ouverture d'entrée 651. En rencontrant le fond 650 de la fente, la fibre optique se courbe selon la courbure dudit fond 650 et le longe jusqu'à l'ouverture de sortie 652 et l'orifice de passage 110 du flasque 11. La fibre optique peut ainsi passer au travers de l'orifice 110.

Sur les figures 3 à 6, un autre élément de guidage 64 est représenté. Ce second élément de guidage vient avantageusement en complément du premier élément de guidage 65, mais il n'est qu'optionnel. Le second élément de guidage 64 est agencé entre l'outil de coupe 63 et le premier élément de guidage 65 sur le parcours de la fibre optique.

Comme on le voit mieux sur la figure 6, l'élément de guidage 64 présente une forme d'entonnoir dont l'axe de révolution est vertical. Ledit élément de guidage 64 comprend une ouverture 641 d'entrée de la fibre optique présentant un diamètre relativement large, et une ouverture 642 de sortie de la fibre optique présentant un diamètre relativement étroit. La surface intérieure de l'élément de guidage entre l'ouverture d'entrée 641 et l'ouverture de sortie 642 présente successivement une forme conique puis une forme cylindrique, la portion cylindrique 640, qui présente le diamètre étroit de l'orifice 642, ayant une certaine longueur pour orienter la fibre optique dans une direction verticale.

En fonctionnement, l'axe de la portion cylindrique 640 est parallèle aux parois de la fente de l'élément 65, et se situe de préférence dans un plan médian de ces deux parois.

De manière avantageuse, la distance entre l'ouverture de sortie 642 de l'élément de guidage 64 et l'ouverture d'entrée 651 de l'élément de guidage 65 est la plus faible possible, typiquement inférieure à 20 mm. Eventuellement, les éléments 64 et 65 peuvent être assemblés de sorte à constituer une même pièce.

De manière avantageuse, la distance entre les galets 60, 61 et l'ouverture d'entrée de l'élément de guidage 65 (ou éventuellement de l'élément de guidage 64) est la plus faible possible, afin de maîtriser la trajectoire de l'extrémité de la fibre optique au cours de l'enfilage. A titre purement indicatif, ladite distance est comprise entre 5 et 30 mm. De même, la distance entre l'ouverture de sortie 652 de l'élément de guidage 65 et le flasque 11 est la plus faible possible. A titre purement indicatif, ladite distance est comprise entre 0 et 10 mm.

Le dispositif 6 comprend un système de commande de la pince, des galets, de l'outil de coupe et du(des) élément(s) de guidage, configuré pour synchroniser l'actionnement de ces éléments en vue de mettre en oeuvre la séquence décrite en référence aux figures 3 à 5.

## Revendications

1. Dispositif (6) d'enfilage d'une fibre optique (100) au travers d'un orifice de passage (110) ménagé dans un flasque (11) d'une bobine, **caractérisé en ce qu'**il comprend, de l'amont vers l'aval sur la trajectoire de la fibre optique :
- un système (60, 61) d'entraînement en défilement de la fibre optique,
- un outil (63) de coupe de la fibre optique,
- un premier élément de guidage (65) de la fibre optique comprenant une fente dont le fond (650) décrit une courbe entre une ouverture d'entrée (651) située en regard du système d'entraînement (60, 61) et une ouverture de sortie (652) destinée à être agencée en regard de l'orifice de passage (110) du flasque de la bobine.

2. Dispositif selon la revendication 1, **caractérisé en ce qu'**il comprend en outre, entre l'outil de coupe (63) et le premier élément de guidage (65), un second élément de guidage comprenant une portion conique présentant une ouverture d'entrée (641) de la fibre optique plus large que l'orifice de sortie (642) de la fibre optique.

3. Dispositif selon la revendication 2, **caractérisé en ce que** le second élément de guidage (64) comprend une portion cylindrique (640) en aval de la portion conique sur la trajectoire de la fibre optique.

4. Dispositif selon l'une des revendications 1 à 3, **caractérisé en ce que** le système d'entraînement de la fibre optique comprend deux galets (60, 61) agencés sur la trajectoire de la fibre optique de sorte à exercer une pression sur la fibre optique, l'un desdits galets (60) étant entraîné en rotation par un moteur.

5. Machine (1000) de production d'une fibre optique (100), **caractérisée en ce qu'**elle comprend un dispositif d'enfilage selon l'une des revendications 1 à 4.

6. Machine selon la revendication 5, **caractérisée en ce qu'**elle comprend en outre :
- au moins un cabestan (20, 21) et au moins une poulie (22), lesdits cabestan(s) et poulie(s) définissant une trajectoire de la fibre optique dans une zone principale (2) de ladite machine,
- un système de guidage de la fibre optique comprenant un organe de transmission (25) et une pince (26) rigidement liée audit organe (25) apte à tenir une extrémité de la fibre optique (100), ledit organe de transmission (25) étant agencé parallèlement à la trajectoire de la fibre optique.

7. Procédé d'enfilage d'une fibre optique (100) au travers d'un orifice de passage (110) ménagé dans un flasque (11) d'une bobine, **caractérisé en ce qu'**il comprend :
- la fourniture d'un dispositif selon l'une des revendications 1 à 4, l'orifice de passage (110) étant positionné en regard de l'ouverture de sortie (652) du premier élément de guidage (65),
- l'engagement de la fibre optique (100) dans le système d'entraînement (60, 61),
- la coupe de la fibre optique (100) par l'outil de coupe (63),
- l'entraînement en défilement de l'extrémité de la fibre optique vers l'ouverture d'entrée (651) du premier élément de guidage (65) et le guidage de la fibre optique dans la fente jusqu'à l'ouverture de sortie (652).

## Patentansprüche

1. Einfädelvorrichtung (6) einer Glasfaser (100) durch eine in einer Blende (11) einer Spule ausgesparte Durchgangsöffnung (110), **dadurch gekennzeichnet, dass** sie auf der Bahn der Glasfaser von vorne nach hinten umfasst:
- ein Antriebssystem (60, 61) für den Ablauf der Glasfaser,
- ein Schneidwerkzeug (63) der Glasfaser,
- ein erstes Führungselement (65) der Glasfaser, umfassend einen Schlitz, dessen Boden (650) eine Kurve zwischen einer gegenüber dem Antriebssystem (60, 61) angeordneten Eingangsöffnung (651) und einer Ausgangsöffnung (652) umfasst, die dazu bestimmt ist, gegenüber der Durchgangsöffnung (110) der Blende der Spule angeordnet zu sein.

2. Vorrichtung gemäß Anspruch 1, **dadurch gekennzeichnet, dass** es darüber hinaus zwischen dem Schneidwerkzeug (63) und dem ersten Führungselement (65) ein zweites Führungselement umfasst, umfassend einen konischen Abschnitt, der eine Eingangsöffnung (641) der Glasfaser aufweist, die breiter ist als die Ausgangsöffnung (642) der Glasfaser.

3. Vorrichtung gemäß Anspruch 2, **dadurch gekennzeichnet, dass** das zweite Führungselement (64) einen dem konischen Abschnitt auf der Bahn der Glasfaser nachgeschalteten zylindrischen Abschnitt (640) umfasst.

4. Vorrichtung gemäß einem der Ansprüche 1 bis 3, **dadurch gekennzeichnet, dass** das Antriebssystem der Glasfaser zwei Rollen (60, 61) umfasst, die auf der Bahn der Glasfaser derart angeordnet sind, dass ein Druck auf die Glasfaser ausgeübt wird, wobei eine der genannten Rollen (60) durch einen Motor in Rotor angetrieben ist.

5. Produktionsmaschine (1000) einer Glasfaser (100) **dadurch gekennzeichnet, dass** sie eine Einfädelvorrichtung gemäß einer der Ansprüche 1 bi 4 umfasst.

6. Maschine gemäß Anspruch 5, **dadurch gekennzeichnet, dass** sie darüber hinaus umfasst:
- wenigstens eine Winde (20, 21) und wenigstens eine Riemenscheibe (22), wobei die genannte(n) Winde(n) und Riemenscheibe (n) eine Bahn der Glasfaser in einem Hauptbereich (2) der genannten Maschine definieren,
- ein Führungssystem der Glasfaser, umfassend ein Übertragungsorgan (25) und eine steif mit dem genannten Organ (25) verbundene Klemme (26), die geeignet ist, ein Ende der Glasfaser (100) zu halten, wobei das genannte Übertragungsorgan (25) parallel zu der Bahn der Glasfaser angeordnet ist.

7. Einfädelverfahren einer Glasfaser (100) durch eine in einer Blende (11) einer Spule ausgesparte Durchgangsöffnung (100), **dadurch gekennzeichnet, dass** sie umfasst:
- die Lieferung einer Vorrichtung gemäß einem der Ansprüche 1 bis 4, wobei die Durchgangsöffnung (110) gegenüber der Ausgangsöffnung (652) des ersten Führungselements (65) positioniert ist,
- das Einlegen der Glasfaser (100) in das Antriebssystem (60, 61),
- das Schneiden der Glasfaser (100) durch das Schneidwerkzeug (63),
- den Antrieb des Endes der Glasfaser für den Ablauf zur Eingangsöffnung (651) des ersten Führungselements (65) und die Führung der Glasfaser in dem Schlitz bis zur Ausgangsöffnung (652).

## Claims

1. Device (6) for inserting an optical fibre (100) through a port (110) arranged in a rim (11) of a bobbin, **characterised in that** it comprises, along the direction in which the optical fibre runs:
- a system (60, 61) for moving the optical fibre along,
- a tool (63) for cutting the optical fibre,
- a first optical fibre-guiding element (65) comprising a slot, the base (650) of which defines a curve between an inlet (651) facing the moving system (60, 61) and an outlet (652) that is to face the port (110) in the rim of the bobbin.

2. Device according to claim 1, **characterised in that** it further comprises, between the cutting tool (63) and the first guiding element (65), a second guiding element comprising a conic portion that has an inlet (641) for the optical fibre, wider than the outlet hole (642) for the optical fibre.

3. Device according to claim 2, **characterised in that** the second guiding element (64) comprises a cylindrical portion (640) downstream of the conic portion along the direction the optical fibre runs.

4. Device according to one of the claims 1 to 3, **characterised in that** the system for moving the optical fibre comprises two rollers (60, 61) arranged along the direction the optical fibre runs, so as to exert a pressure on the optical fibre, one of said rollers (60) being rotated by a motor.

5. Machine (1000) for producing an optical fibre (100), **characterised in that** it comprises an insertion device according to one of the claims 1 to 4.

6. Machine according to claim 5, **characterised in that** it further comprises:
- at least one capstan (20, 21) and at least one pulley (22), said capstan(s) and pulley(s) defining a direction in which the optical fibre runs in a main area (2) of said machine,
- an optical fibre-guiding system comprising a transmission body (25) and a clamping element (26) rigidly connected to said body (25) able to hold an end of the optical fibre (100), said transmission body (25) being arranged parallel to the direction in which the optical fibre runs.

7. Method for inserting an optical fibre (100) through a port (110) arranged in a rim (11) of a bobbin, **characterised in that** it comprises:
- supplying a device according to one of the claims 1 to 4, the port (110) being positioned facing the outlet (652) of the first guiding element (65),
- inserting the optical fibre (100) into the moving system (60, 61),
- cutting the optical fibre (100) by the cutting tool (63),
- moving the end of the optical fibre along towards the inlet (651) for the first guiding element (65) and the guiding of the optical fibre in the slot up to the outlet (652).
